# EUROPEAN PATENT APPLICATION

(11) **EP 1 862 895 A1**
(43) Date of publication of application: **05.12.2007**
(21) Application number: 07100207.5
(22) Date of filing: 08.01.2007
(51) Int. Cl.: G06F 3/06

(54) **Electronic phone book search method**

(30) Priority: 01.06.2006 KR 20060049274
(71) Applicant: Samsung Electronics Co., Ltd., Suwon-si, Gyeonggi-Do (KR)
(72) Inventor: Jang, Ki Tae, Gyeonggi-do (KR)
(74) Representative: Zimmer, Franz-Josef

(57) **Abstract**

A search method and apparatus for a database are disclosed. The search apparatus includes a database for storing records having n searchable fields, a display unit for displaying one or more input boxes according to the number of input characters, a key input unit for inputting a character or a command to erase an already input character, and a controller for controlling the number and states of input boxes to be displayed through the display unit, and for generating a query to retrieve desired records from the database. As a result, n separate input boxes , are displayed according to the number of input characters. Effective search results can be produced with a reduced number of input characters.

## Description

### BACKGROUND OF THE INVENTION

### 1. Field of the Invention

The present invention relates generally to a search method and apparatus and, more particularly, to a database search method and apparatus capable of reducing the number of input characters for search.

### 2. Description of the Related Art

Advances in mobile communication technologies have enabled the current proliferation of mobile communication terminals. In addition to conventional phone call processing, advanced mobile communication terminals support various functions such as text message and image transmission. These advanced terminals find an increased use in the daily lives of users.

For example, a user stores important phone numbers and contact addresses in a mobile communication terminal phonebook for management of contacts and schedules. However, with the ever-increasing memory capacity of a mobile communication terminal, the number of phone numbers stored in the phonebook tends to increase, making it difficult to find a desired phone number from the phone book.

Various schemes have been proposed for mobile terminal phonebook search. Conventional schemes search phonebooks using particular character strings as search terms. For example, when a user inputs a character string as a first name and another character string as a family name, or when the user inputs a short character string contained in a first name or family name, the mobile communication terminal searches a stored phonebook using the one or more input character strings.

In such conventional search schemes, search results tend to improve as the number of input characters increases. For example, more than two input characters may be necessary to obtain desired search results.

In the case of data in the Korean language, use of consonants as terms for initial search has been proposed for efficient search. However, consonant-only terms for initial search may be ineffective for data in other languages such as English, in which the initial character of a group of characters may not typically be a consonant.

### SUMMARY OF THE INVENTION

The present invention has been made in view of the above problems, and an object of the present invention is to provide a search method and apparatus that can produce effective search results with a reduced number of input characters regardless of the language used.

In accordance with the present invention, there is provided a search method for a database, the database storing records having first and second searchable fields, the search method including retrieving, in response to input of a first character, records having first searchable fields that include the first character from the database, selecting, in response to input of a second character, records having second searchable fields that include the second character from the retrieved records, and searching, in response to input of a third character, records having first searchable fields that include a character string formed by the first to third characters in sequence from the database.

The search method further includes displaying a first input box and second input box, displaying, in response to input of the first character, the first character in the first input box, displaying, in response to input of the second character, the second character in the second input box, and combining, in response to input of the third character, the first input box and second input box into a combined input box and displaying the combined input box, and displaying the character string in the combined input box.

The search method further includes separating, in response to erasure of the third character, the combined input box into a first input box and second input box and displaying the first input box and second input box, and displaying the first and second characters in the first input box and second input box, respectively.

In accordance with the present invention, there is provided a search method for a database, the database storing records having first to nth searchable fields, the search method including retrieving, if the number of input characters (m) is less than or equal to the number of searchable fields (n), records having first to mth searchable fields that include the first to mth characters, respectively, from the database, and searching, if m is greater than n, records having first searchable fields that include a character string formed by the first to mth characters in sequence from the database.

In the retrieving step, search results of a current search operation using the first to kth (2≤k≤m) characters are derived from those, if available, of a previous search operation using the first to (k-1)th characters.

The search method further includes displaying first to nth input boxes, displaying, if m is less than or equal to n, the first to mth characters in the first to mth input boxes, respectively and combining, if m is greater than n, the first to nth input boxes into one input box and displaying the combined input box, and displaying the character string in the combined input box.

In displaying first to nth input boxes step, field attributes corresponding to the first to nth input boxes are indicated at the first to nth input boxes.

The search method further includes decrementing, in response to input of a character erase command, m by 1, erasing, if m after decrementation is greater than n, the last character of the character string in the combined input box, and separating, if m after decrementation is equal to n, the combined input box into first to nth input boxes, erasing the last character of the character string, and displaying the remaining characters thereof in sequence in the first to nth input boxes.

The search method further includes erasing, if m before decrementation is less than or equal to n, a character in the last one of the non-empty input boxes, and decrementing m by 1.

In accordance with the present invention, there is provided a database search apparatus including a database for storing records having first to nth searchable fields, a display unit for displaying one or more input boxes according to the number of input characters, a key input unit for inputting a character or a command to erase an already input character, and a controller for controlling, in response to input of a character or erase command through the key input unit, the number and states of input boxes to be displayed through the display unit, and for generating a query to retrieve desired records from the database.

The controller generates, if the number of input characters (m) is less than or equal to the number of searchable fields (n), a first query for retrieval of records having first to mth searchable fields that include the first to mth characters, respectively, from the database, and generates, if m is greater than n, a second query for retrieval of records having first searchable fields that include a character string formed by the first to mth characters in sequence from the database.

The controller generates the first query in such a manner that search results of a current search operation using the first to kth (2≤k≤m) characters are derived from those, if available, of a previous search operation using the first to (k-1)th characters.

The controller controls the display unit to display first to nth input boxes; controls, if m is less than or equal to n, display of the first to mth characters in the first to mth input boxes, respectively; and combines, if m is greater than n, the first to nth input boxes into one input box and controls display of the combined input box, and controls display of the character string in the combined input box.

The controller controls indication of field attributes corresponding to the first to nth input boxes, as initial states of the input boxes.

The controller decrements, in response to input of a character erase command, m by 1, erases, if m after decrementation is greater than n, the last character of the character string in the combined input box, and separates, if m after decrementation is equal to n, the combined input box into first to nth input boxes, erases the last character of the character string, and displays the remaining characters thereof in sequence in the first to nth input boxes.

The controller erases, if m before decrementation is less than or equal to n, a character in the last one of the non-empty input boxes, and decrements m by 1.

The controller generates the first query or the second query depending upon m after decrementation.

In each embodiment disclosed herein, the database is a phonebook stored in a mobile communication terminal, and first names and last names are stored in different searchable fields of records in the database.

### BRIEF DESCRIPTION OF THE DRAWINGS

The above and other objects, features and advantages of the present invention will be more apparent from the following detailed description in conjunction with the accompanying drawings, in which:
FIG. 1 illustrates the configuration of a mobile communication terminal for phonebook search according to the present invention;
FIG. 2 illustrates the structure of data records stored in a phonebook database of the mobile communication terminal of FIG. 1;
FIGS. 3 to 5 are flow charts illustrating steps of a phonebook search method according to the present invention; and
FIGS. 6A to 6D are display screen representations illustrating a phonebook search procedure using the mobile communication terminal of FIG. 1.

### DETAILED DESCRIPTION OF THE PREFERRED EMBODIMENTS

Hereinafter, preferred embodiments of the present invention are described in detail with reference to the accompanying drawings. The same reference symbols identify the same or corresponding elements in the drawings. Some constructions or processes known in the art may not be described for the sake of clarity and conciseness.

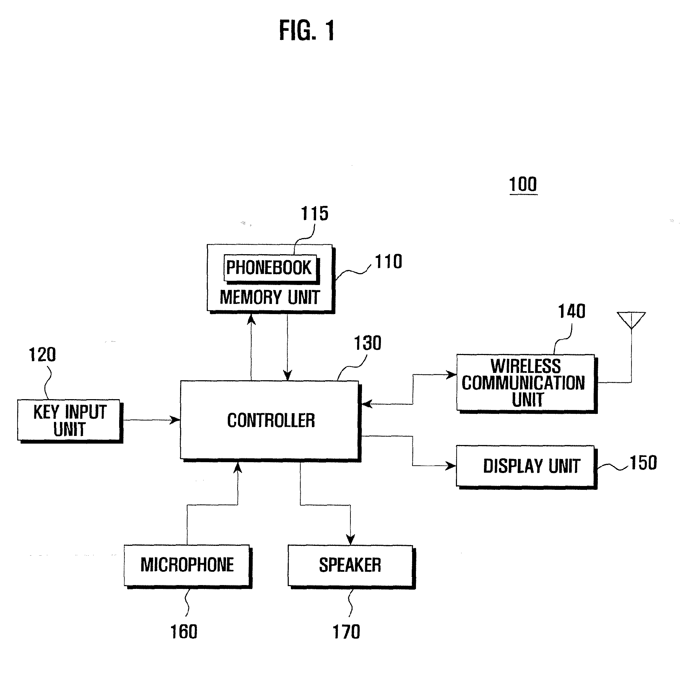

FIG. 1 illustrates the configuration of a mobile communication terminal for phonebook search according to the present invention. Referring to FIG. 1, the mobile communication terminal 100 includes a memory unit 110 containing a phonebook 115, a key input unit 120, a controller 130, a wireless communication unit 140, a display unit 150, a microphone 160 and a speaker 170.

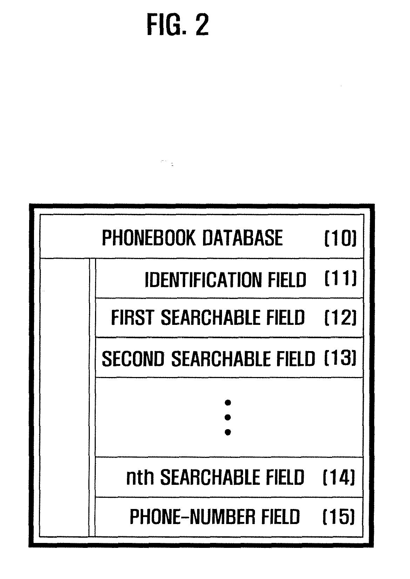

The memory unit 110 stores information related to the operation of the mobile communication terminal 100 (e.g., driver programs and related data for controlling the operation thereof, and short messages). The memory unit 110 contains the phonebook 115 having n searchable fields. The phonebook 115 is managed as a database and the structure of data records stored therein is illustrated in FIG. 2.

Referring to FIG. 2, records in a phonebook database 10 include an identification field 11, first to nth searchable fields 12, 13 and 14 and phone-number fields 15.

The first to nth searchable fields 12, 13 and 14 of a record store information supplementary to a corresponding phone-number stored in the phone number field 15 (e.g., the first and last name of a subscriber associated with the phone number, and company or department name related to the subscriber). Such supplementary information is used to find a desired phone number. For example, in the case of a subscriber whose first name is 'John', last name is 'Doe', place of work is 'BB department of AA company', and phone number is '010-1234-5678', the information '01012345678', 'John', 'Doe' and 'BB department of AA company' are stored in the phone number field 15, first searchable field 12, second searchable field 13 and nth searchable field 14, respectively, of a record.

A plurality of search attributes provided to a phone number enables the user to find a desired phone number from the phonebook database 10 in various manners. For example, the user can find a list of phone numbers of those subscribers whose last names contain the letter 'h', a list of phone numbers of those subscribers whose places of work contain the letter 'o', and a list of phone numbers of those subscribers whose last names contain the letter 'h' and places of work contain the letter 'o'.

Referring back to FIG. 1, the key input unit 120 receives key signals, in particular, for phone-number search. For example, the key input unit 120 receives key signals for inputting characters to compose a query or for erasing a character in a query (e.g., a backspace key signal), and sends the received key signals to the controller 130.

The controller 130 controls the operation of the mobile communication terminal 100 in response to signals input from the key input unit 120 or operational programs pre-stored in the memory unit 110. In particular, the controller 130 controls the number and states of input boxes to be displayed through the display unit 150 in response to input characters and erasure of characters through the key input unit 120.

For example, during a phonebook search mode, the controller 130 controls the mobile communication terminal 100 to display n input boxes. Whenever a character is input, the input character is displayed in a corresponding input box. When the number of input characters is greater than n, the n input boxes are combined into a single input box and a character string composed of the input characters in order of input is displayed in the combined input box.

When an erase command (e.g., a backspace key) is input, the last input character is erased. After erasure of the last input character, if the number of input boxes displayed on the display unit 150 is n, the cursor is moved to the previous input box to that in which the last input character was erased. If a combined input box is displayed, the remaining input characters are counted. If the number of remaining input characters is less than or equal to n, the combined input box is separated into n input boxes and the remaining input characters are distributed among the n input boxes and separately displayed. Thereto, the controller 130 increments or decrements the number of input characters in response to input or erasure of a character, and determines whether to separate a combined input box or to combine input boxes in response to the number of input characters.

The controller 130 generates a query for phone-number search based on a character or an erase command input through the key input unit 120, according to the number of input characters. That is, when the number of input characters is less than or equal to n, the controller 130 generates a first query in such a manner that individual input characters are used in order of input to search corresponding fields of the phonebook from the first searchable field to the nth searchable field. For example, if characters 'a' and 'b' are input in that order, the controller 130 generates a query to search the first searchable fields using the character 'a' in response to input of the character 'a', and generates another query to search the second searchable fields using the character 'b' in response to input of the character 'b'. The search corresponding to input of 'b' is performed within results of the search performed corresponding to input of 'a'. That is, a first query is created to find those records having first and second searchable fields that include 'a' and 'b', respectively.

When the number of input characters is greater than n, the controller 130 generates a second query to search the first searchable fields using a character string composed of the input characters in order of input. For example, if more than n characters 'a', 'b', ..., 'z' are input in that order, a query is created to search the first searchable fields using a character string `ab...z'.

During display of n empty input boxes, the controller 130 displays search attributes corresponding to individual input boxes. For example, when a first input box is associated with an attribute 'first name' and a second input box is associated with an attribute 'last name', before character input, 'first name' and 'last name' are displayed at the first and second input boxes, respectively. A search attribute is not displayed immediately after input of a character at the corresponding input box.

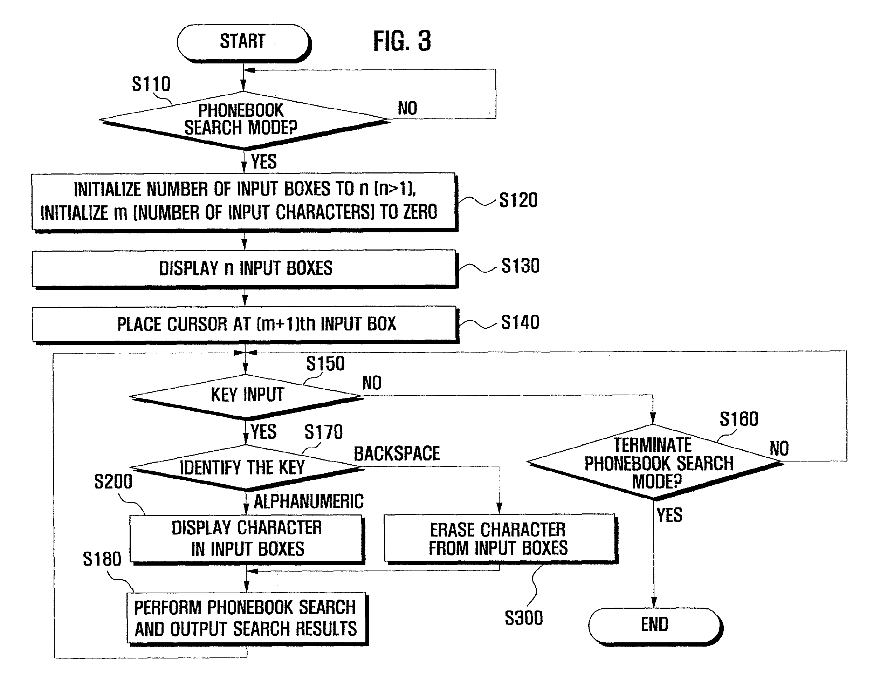

Operations of the controller 130 are illustrated in flow charts of FIGS. 3 to 5, and are described later.

The wireless communication unit 140 provides a communication interface to a wireless network, such as for control of voice or data communication through the wireless network.

The display unit 150 outputs a visual signal under the control of the controller 130. For example, the display unit 150 displays operation states of the mobile communication terminal 100. In particular, the display unit 150 displays one or more input boxes according to the number of input characters during the phonebook search mode.

The microphone 160 receives an acoustic signal (e.g., a voice signal) from the surrounding environment, and sends the received acoustic signal to the controller 130. The speaker 170 outputs an acoustic signal under the control of the controller 130.

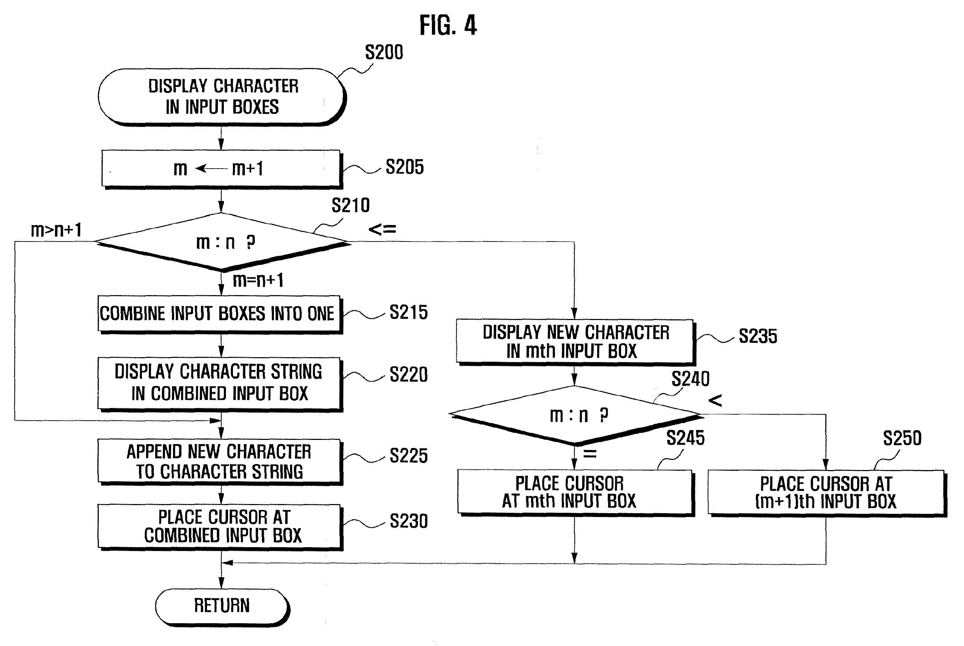

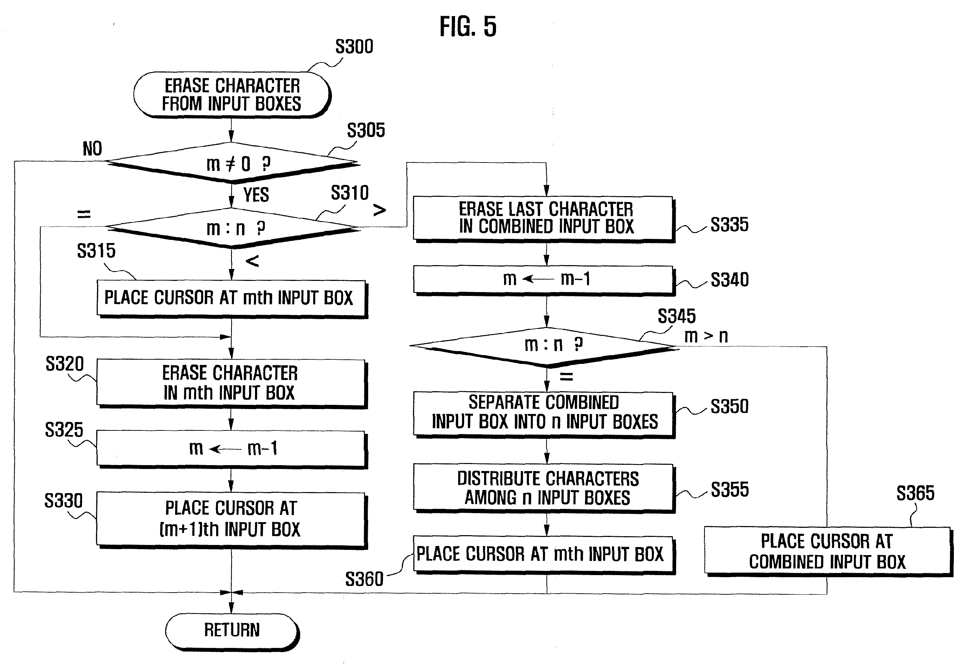

FIGS. 3 to 5 are flow charts illustrating steps of a phonebook search method according to the present invention. The flow chart of FIG. 3 illustrates overall processing of the phonebook search method, the flow chart of FIG. 4 illustrates a character display procedure in the flow chart of FIG. 3, and the flow chart of FIG. 5 illustrates a character erase procedure in the flow chart of FIG. 3.

Referring to FIGS. 1 and 3, when the mobile communication terminal 100 starts to operate in a phonebook search mode (S110), the controller 130 performs initialization for phonebook search (S120). That is, the number of input boxes is initialized to n (n>1), and the number of input characters (m) is initialized to zero. The number of input boxes is set equal to the number of searchable fields in a phonebook to be searched.

The controller 130 controls the display unit 150 to display n input boxes (S130). The input boxes are adaptable to the number of input characters because the number of input boxes is varied according to the number of input characters. For example, if the number of input characters is greater than n, a single combined input box is displayed; otherwise, n input boxes are separately displayed.

The controller 130 displays the cursor at the (m+1)th input box (S140). Because m is initialized to zero at step S120, the cursor is placed at the first input box at step S 140. Thereby, the first input character will be displayed in the first input box.

If a key is input (S 150), the key is identified (S 170). If the key is an alphanumeric key for a character or number, the associated character is displayed in a corresponding input box (S200). The controller 130 counts the number of input characters to control the number of input boxes on the basis of the number of input characters. That is, if the number of input characters is greater than n, the input boxes are combined into a single input box. If the number of input characters is less than or equal to n, the n input boxes are separately displayed.

If the key input at step S 150 is the backspace key, the controller 130 erases the character last input (S300). The controller 130 decrements m (the number of input characters) by 1, and controls the number of input boxes on the basis of the value m. That is, if m after decrementation is greater than n, a single input box is displayed. If m after decrementation is less than or equal to n, the input boxes are separately displayed.

The character display step (S200) and character erase step (S300) are illustrated in more detail in FIGS. 4 and 5, respectively, and are described later.

The controller 130 generates a query corresponding to character input or erasure, searches the phonebook using the generated query, and outputs the search results (S180). Generation of a query corresponding to character input or erasure is illustrated in the description of the controller 130 in FIG. 1.

In the phonebook search mode, if no key is input during a time interval at step S 150, the controller 130 determines whether a key is input to terminate the phonebook search mode (S160), and terminates the phonebook search mode depending upon a user selection.

Referring to FIGS. 1 and 4, in response to input of a character, the controller 130 increments m (the number of input characters) by 1 (S205). The controller 130 compares m after increment with n (the number of input boxes) (S210) to determine whether combination of the input boxes is necessary.

If m is less than or equal to n, the controller 130 displays the newly input character in the mth input box (S235), and compares m with n (S240). If m is equal to n (if the mth input box is the last one), the controller 130 places the cursor to the mth input box (S245). If m is less than n, the controller 130 places the cursor at the (m+1)th input box (S250).

If m is determined to be equal to n+1 at step S210, the controller combines the n input boxes into one (S215), and displays a character string in the combined input box, wherein the character string is composed of the characters that were separately displayed, in the sequence of their corresponding input boxes before combination. The newly input character is appended to the character string (S225), and the cursor is placed at the combined input box (S230).

If m is determined to be greater than n+1 at step S210, the controller performs steps S225 and S230 to append the newly input character to the character string in the combined input box.

After display of the newly input character as illustrated in FIG. 4, the controller performs step S 180 in FIG. 3 to search the phonebook and output the search results.

Referring to FIGS. 1 and 5, the character erase step (S300) is described.

In response to input of a command to erase a character (e.g., using a backspace key), the controller 130 determines whether the value of m (the number of input characters) is not equal to zero (S305). If m is not equal to zero, the controller 130 compares m with n (the number of input boxes) (S310).

If m is less than n, the controller 130 moves the cursor to the mth input box (S315) and erases a character in the mth input box (S320). Here, step S315 and step S320 are related to step S235 and step S250 in FIG. 4.

If m is determined to be equal to n at step S310 (i.e. if the mth input box is the last one), the controller 130 erases a character in the mth input box (S320). Here, Step S320 is related to step S235 and step S245 in FIG. 4.

After character erasure at step S320, the controller 130 decrements m by 1 (S325) and places the cursor at the (m+1)th input box for display of a next input character therein (S330).

If m is determined to be greater than n at step S310 (display of a character string in the combined input box), the controller 130 erases the last character from the character string in the combined input box (S335), decrements m by 1 (S340), and compares m with n (S345).

If m is equal to n, the controller 130 separates the combined input box into n input boxes (S350), distributes characters of the character string displayed in the combined input box separately among the n input boxes (S355), and places the cursor at the mth input box (S360).

If m is determined to be greater than n, the controller 130 places the cursor at the combined input box (S365).

After erasure of a character as illustrated in FIG. 5, the controller performs step S 180 in FIG. 3 to search the phonebook and output the search results.

FIGS. 6A to 6D are display screen representations illustrating a phonebook search procedure using the mobile communication terminal of FIG. 1. In FIGS. 6A to 6D, the mobile communication terminal uses two input boxes.

FIG. 6A illustrates an initial screen in a phonebook search mode of the mobile communication terminal. The initial screen contains a first input box 152, a second input box 154, a first result box 156, a second result box 158, and a cursor placed at the first input box 152. No query has been input yet in the initial screen, and records (e.g., names) stored in a phonebook are listed in order of storage in the first and second result boxes 156 and 158.

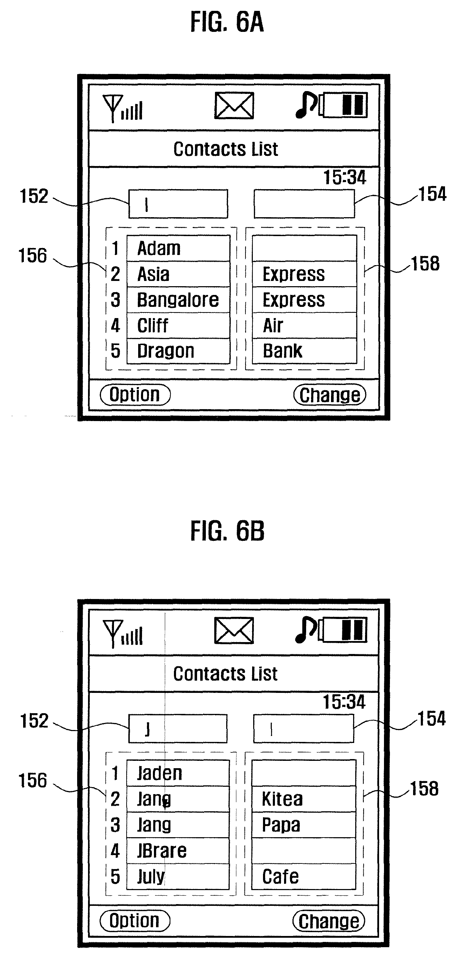

FIG. 6B illustrates a screen resulting from input of a character 'J' to the screen of FIG. 6A. The input character `J' is displayed in the first input box 152. From the phonebook, those records having first searchable fields that include the character `J' are retrieved and listed in the first and second result boxes 156 and 158. The cursor is placed at the second input box 154, indicating the location where a next input character will be displayed.

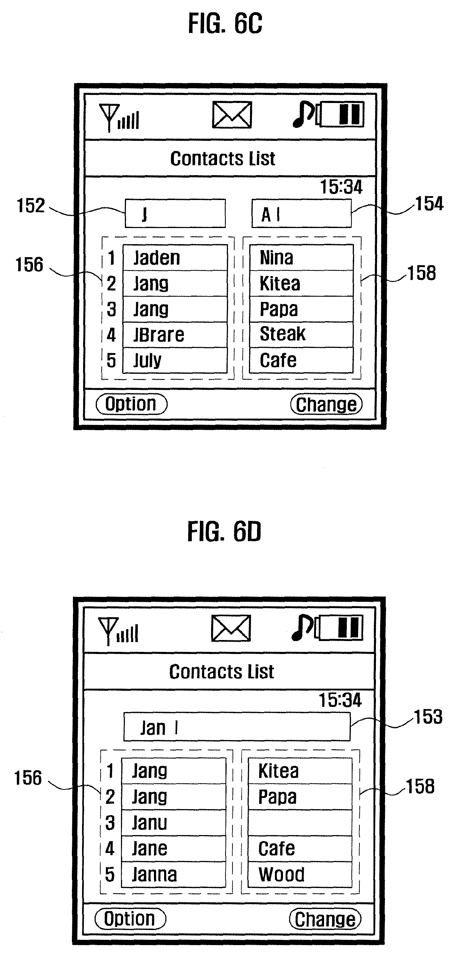

FIG. 6C illustrates a screen resulting from new input of a character 'A' to the screen of FIG. 6B. The input character `A' is displayed in the second input box 154. From the phonebook, those records having first searchable fields that include the character 'J' and second searchable fields that include the character 'A' are searched and listed in the first and second result boxes 156 and 158. The cursor remains at the second input box 154.

FIG. 6D illustrates a screen resulting from new input of a character 'N' to the screen of FIG. 6C. The number of input characters is 3 and is greater than the number of input boxes, 2. One combined input box 153 is displayed in the screen of FIG. 6D. A character string 'Jan' composed of all the input characters is displayed in the combined input box 153. From the phonebook, those records having first searchable fields that include the character string 'Jan' are searched and listed in the first and second result boxes 156 and 158. The cursor is placed at the combined input box 153.

When the screen of FIG. 6D is displayed in the mobile communication terminal, if the user inputs a new character, the new character would be appended to the character string in the combined input box 153.

Further, when the screen of FIG. 6D is displayed, if the user erases the last character 'n', the mobile communication terminal would display a screen identical to that of FIG. 6C, and the combined input box 153 would be separated into a first input box 152 and second input box 154, and the remaining characters 'J' and 'A' would be displayed in the first input box 152 and second input box 154.

As described above, in the present invention, the number of input boxes is varied according to the number of input characters, and a query is created using a character displayed in each input box. Furthermore, either n separate input boxes or a combined input box are used to input characters as search terms according to the number of input characters, and characters in the individual input boxes are used to search different searchable fields of a database. Hence, effective search results can be produced with a reduced number of input characters.

While preferred embodiments of the present invention have been shown and described in this specification, it will be understood by those skilled in the art that various changes or modifications of the embodiments are possible without departing from the spirit and scope of the invention as defined by the appended claims. For example, in the description, phonebook search for a mobile communication terminal is illustrated. However, the present invention is not limited to phonebook search, and may also be applied to any database having multiple searchable fields.

## Claims

1. A search method for a database, the database storing records having first and second searchable fields, the search method comprising:
retrieving, from the database, in response to input of a first character, records having first searchable fields that include the first character;
selecting, from the retrieved records, in response to input of a second character, records having second searchable fields that include the second character; and
searching, from the database, in response to input of a third character, records having first searchable fields that include a character string formed by the first to third characters in sequence.

2. The search method of claim 1, further comprising:
displaying a first input box and second input box;
displaying, in response to input of the first character, the first character in the first input box;
displaying, in response to input of the second character, the second character in the second input box; and
combining, in response to input of the third character, the first input box and second input box into a combined input box and displaying the combined input box, and displaying the character string in the combined input box.

3. The search method of claim 2, wherein the displaying a first input box step further comprises field attributes corresponding to the first input box and second input box that are indicated at the first input box and second input box.

4. The search method of claim 2, further comprising:
separating, in response to erasure of the third character, the combined input box into a first input box and second input box and displaying the first input box and second input box; and
displaying the first and second characters in the first input box and second input box, respectively.

5. The search method of claim 4, wherein the retrieving step and the selecting step are performed again in sequence in response to erasure of the third character.

6. The search method of Claim 1, wherein the database is a phonebook stored in a mobile communication terminal, and first names and last names are stored in the first and second searchable fields, respectively, of records in the database.

7. A search method for a database, the database storing records having first to nth searchable fields, the search method comprising:
retrieving, from the database, if the number of input characters (m) is less than or equal to the number of searchable fields (n), records having first to mth searchable fields that include the first to mth characters, respectively; and
searching, from the database, if m is greater than n, records having first searchable fields that include a character string formed by the first to mth characters in sequence.

8. The search method of claim 7, wherein the retrieving step further comprises search results of a current search operation using the first to kth (2≤k≤m) characters that are derived from those, if available, of a previous search operation using the first to (k-1)th characters.

9. The search method of claim 8, further comprising:
displaying first to nth input boxes;
displaying, if m is less than or equal to n, the first to mth characters in the first to mth input boxes, respectively; and
combining, if m is greater than n, the first to nth input boxes into a combined input box and displaying the combined input box, and displaying the character string in the combined input box.

10. The search method of claim 9, wherein the displaying first to nth input boxes step further includes field attributes corresponding to the first to nth input boxes that are indicated at the first to nth input boxes.

11. The search method of claim 9, further comprising:
decrementing, in response to input of a character erase command, m by 1;
erasing, if m after decrementation is greater than n, the last character of the character string in the combined input box; and
separating, if m after decrementation is equal to n, the combined input box into first to nth input boxes, erasing a last character of the character string, and displaying remaining characters thereof in sequence in the first to nth input boxes.

12. The search method of claim 11, further comprising erasing, if m before decrementation is less than or equal to n, a character in a last one of the non-empty input boxes, and decrementing m by 1.

13. The search method of claim 11, wherein one of the retrieving step and the searching step is performed depending upon m after decrementation.

14. The search method of Claim 7, wherein the database is a phonebook stored in a mobile communication terminal, and first and last names are stored in different searchable fields of records in the database.

15. A database search apparatus comprising:
a database for storing records having first to nth searchable fields;
a display unit for displaying one or more input boxes according to a number of input characters;
a key input unit for inputting a character or a command to erase a previously input character; and
a controller for controlling, in response to input of a character or erase command through the key input unit, a number and states of input boxes to be displayed through the display unit, and for generating a query to retrieve desired records from the database.

16. The database search apparatus of claim 15, wherein the controller generates, from the database, if the number of input characters (m) is less than or equal to the number of searchable fields (n), a first query for retrieval of records having first to mth searchable fields that include the first to mth characters, respectively, and generates, from the database, if m is greater than n, a second query for retrieval of records having first searchable fields that include a character string formed by the first to mth characters in sequence.

17. The database search apparatus of claim 16, wherein the controller generates the first query in such a manner that search results of a current search operation using the first to kth (2≤k≤m) characters are derived from those, if available, of a previous search operation using the first to (k-1)th characters.

18. The database search apparatus of claim 16, wherein the controller controls the display unit to display first to nth input boxes, controls, if m is less than or equal to n, display of the first to mth characters in the first to mth input boxes, respectively, and combines, if m is greater than n, the first to nth input boxes into a combined input box and controls display of the combined input box, and controls display of the character string in the combined input box.

19. The database search apparatus of claim 18, wherein the controller controls indication of field attributes corresponding to the first to nth input boxes, as initial states of the input boxes.

20. The database search apparatus of claim 18, wherein the controller decrements, in response to input of a character erase command, m by 1, erases, if m after decrementation is greater than n, a last character of the character string in the combined input box, and separates, if m after decrementation is equal to n, the combined input box into first to nth input boxes, erases the last character of the character string, and displays remaining characters thereof in sequence in the first to nth input boxes.

21. The database search apparatus of claim 20, wherein the controller erases, if m before decrementation is less than or equal to n, a character in a last one of the non-empty input boxes, and decrements m by 1.

22. The database search apparatus of claim 21, wherein the controller generates the first query or the second query depending upon m after decrementation.

23. The database search apparatus of claim 15, wherein the database is a phonebook stored in a mobile communication terminal, and first and last names are stored in different searchable fields of records in the database.
